# EUROPEAN PATENT SPECIFICATION

(11) **EP 3 285 332 B1**
(45) Date of publication and mention of the grant of the patent: **03.04.2019**
(21) Application number: 16185041.7
(22) Date of filing: 19.08.2016
(51) Int. Cl.: H01Q 1/32, H01Q 9/40, H01Q 21/24

(54) **ANTENNA SYSTEM**
ANTENNENSYSTEM
SYSTÈME D'ANTENNE

(43) Date of publication of application: 21.02.2018
(73) Proprietor: Swisscom AG, 3050 Bern (CH)
(72) Inventor: Jamaly, Nima, 3008 Bern (CH)
(74) Representative: P&TS SA (AG, Ltd.)

(56) References cited:
- EP-A1- 1 744 470
- US-A1- 2016 006 114

## Description

### Field of the invention

The present disclosure relates to antenna apparatus, for example suitable for installations on metal surfaces, particularly roofs of vehicles.

### Description of related art

The widespread use of mobile communication devices for wireless data communication has made it a challenge for manufacturers and operators of telecommunications networks to provide wireless data communication with sufficient bandwidth and broadband capacity. In particular, issues related to communication arise in use scenarios related to transportation. For example, on trains, where typically a large number of users attempt to use broadband data communication services simultaneously through the same limited number of base stations in reach of the train, it may be very difficult to provide sufficient data communication capacity for a passing train. Moreover, the tremendous increase of the speed of trains has accentuated this problem as data communication resources need to be provided very quickly, with great bandwidth and broadband capacity, preferably as a multiple-in/multiple-out (MIMO) system.

Monocone-type antennas with a conical active antenna element centrally fed or driven through the bottom of a frusto-conical ground conductor arranged as a recess surrounding the active element are described in the published European patent application EP 3002826 A1. Exemplary uses of such an antenna are described in the '826 publication as to provide a low profile antenna apparatus for installation in surfaces, for example in a surface of a wall, a road or a maintenance cover for an access hole in a roadway such as a manhole.

EP1744470 discloses an antenna system for satellite digital audio radio services (SDARS) with two antennas arranged at an elevation angle with respect to a vehicle surface.

In view of the known art it may be seen as a problem to provide robust, MIMO capable antennas suitable for roof installation on trains and the like.

### Brief summary of the invention

An antenna system is provided in the independent claim 1.

The angular arrangement of the two monocone antennas provides an antenna system with polarity and pattern diversity. In addition, the radiation pattern of the claimed antenna system is less influenced by large metal surfaces as present on the roof of trains. Notwithstanding the good properties the antenna system can be realized quite flat compared to state of the art solutions with similar characteristics.

These and other aspects, advantages and novel features of the present invention, as well as details of an illustrated embodiment thereof, will be more fully understood from the following description and drawings.

### Brief Description of the Drawings

The invention will be better understood with the aid of the description of an embodiment given by way of example and illustrated by the figures, in which:
Fig. 1A - 1C are different views of an antenna system in in accordance with an example of the invention;
Fig. 2 shows a reflection/coupling versus frequency diagram of the antenna system of Fig. 1; and
Fig. 3 illustrates EM radiation patterns across a bandwidth of the antenna system of Fig. 1.

### Detailed Description

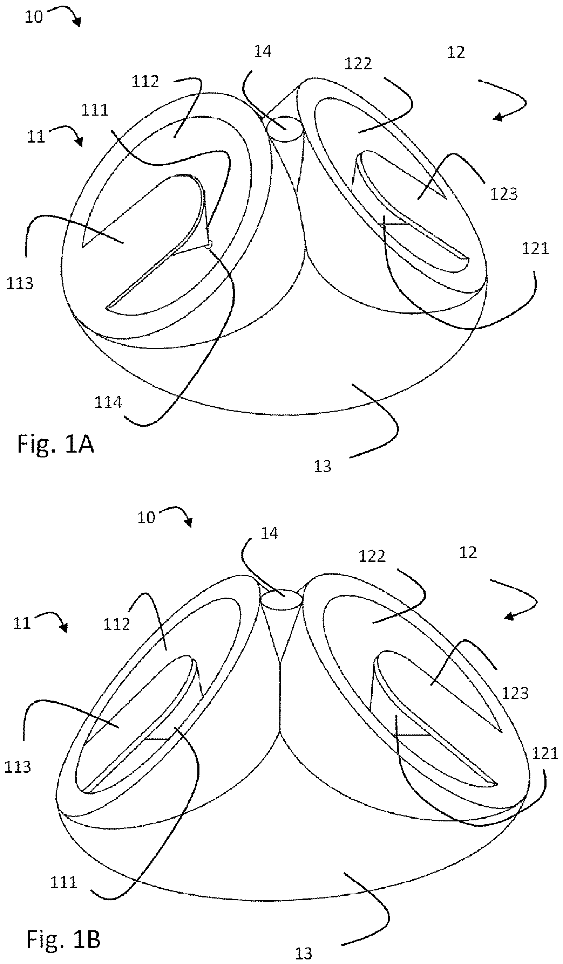

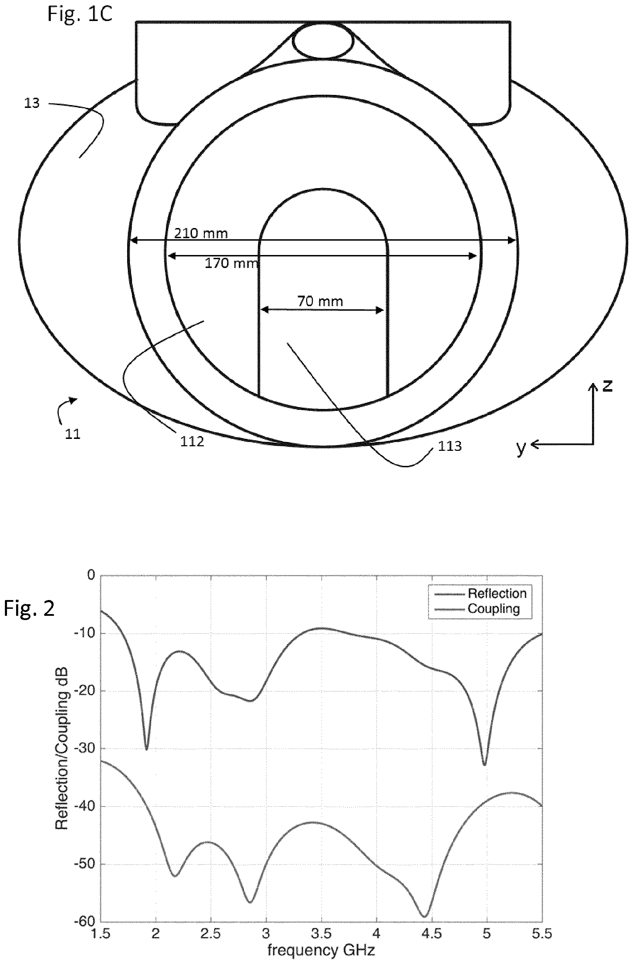

The figures 1A, 1B and 1C show different views of the same antenna system 10. The antenna system 10 includes two monocone antennas 11, 12 mounted onto a raised base structure 13.

Each monocone antenna 11, 12 comprise a monocone 111,121 suspended in a conically shaped recess 112,122 (also called shell). The monocones are suspended from a suspension structure 113,123, e.g. lever or arm, extending from its circumference across a segment of the recess 112,122. A feeding point 114 is arranged at or near the tip of each monocone 111,121. In one embodiment, the two monocone antennas 11 and 12 are formed identical.

Each conical recess 112, 122 have an opening defined by the borders of the recess 112, 122 defining the base surface of the cone. In one embodiment, the form of the opening is circular. Each conical recess 112, 122 has a central axis defined as the axis extending through the (in the case of a frusto conical recess virtual) tip of the conical recess 112, 122 and through the centre point of the opening. In one embodiment, the central axis of the conical recess 112, 122 is perpendicular to the surface of the opening. In one embodiment, the conically shaped recess 112, 122 is a frusto-conically shaped recess 112, 122, i.e. a conical recess with a cut off tip having an interior base plane. In one embodiment, the tip is cut off in the plane rectangular to the central axis of the conical recess 112, 122, i.e. the interior base surface is perpendicular to the central axis of the conical recess. In one embodiment, the tip is cut off in the plane rectangular to the central axis of the cone 111, 121. The diameter of the interior base surface could be one parameter for the impedance and/or frequency of the monocone antenna 11, 12. The conical recess or its surface is made of an electrically conductive material, e.g. a metal. The conical recess 112, 122 is preferably electrically connected to a ground conductor (preferably arranged coaxially around the feeding point 114.

Each monocone 111, 121 have a base surface and lateral or conical surface. In one embodiment, the base surface has a circular form. Each monocone 111, 121 have a central axis defined as the axis extending through the tip of the monocone 111, 121 and through the centre point of the base surface. In one embodiment, the central axis of the monocone 111, 121 is perpendicular to the base surface. In the shown embodiment, the monocone is right circular. In one embodiment, the monocone 111, 121 and the conical recess are arranged coaxially, i.e. the central axis of the monocone 111, 121 corresponds to the central axis of the conical recess 112, 122. In one embodiment, the base surface of the monocone 111, 121 is parallel to the plane of the opening of the conical recess 121, 122 or lays in the same plane as the opening of the conical recess 121, 122. The monocone or its surface is made of an electrically conductive material, e.g. a metal. The tip of the monocone 111, 121 is connected to the feeding point 114.

In one embodiment, the suspension structure 113, 123 is a lever or arm extending from the conical recess 112, 122 to the moncone 111, 121. In one embodiment, the lever or arm extends from the circumferential edge of the opening of the conical recess 112, 122 to the base surface of the monocone 111, 112. Preferably, the suspension structure 113, 123 electrically connects the (base surface of the) monocone 111, 121 with the (circumferential edge of the) conical recess in order to achieve a DC ground connection. In one embodiment, the lever or arm is made of electrically conductive material such that even high currents up to 40 kA (kilo Ampere) can be conducted over the suspension structure. In one embodiment, the lever is arranged versus the bottom of the antenna system 10 (definition see below).

The feeding points may be connected in operation to an apparatus (not shown) providing a signal feed for transmission or detecting signals received by the antenna system 10. An additional element 14, such as an antenna for a location system (GPS, etc.), may be positioned in a space between the two recesses, e.g. at the top of the base structure 13. The additional element 14 may contribute to an overall compact structure of the antenna system, however, it will be understood from the following that the antenna systems may be designed and operated without it.

As shown the two essentially identical monocone antennas 11, 12 are mounted onto the base structure 13 at an angle with respect to each other taking for example the central axis of the monocone 111,121 as reference for the orientation of each monocone antenna 11, 12. The angle may preferably be in the range of 70 to 110 degrees, even more preferably be in the range of 75 to 105 degrees, even more preferably in the range of 85 to 95 degrees. It will be appreciated that the exact angle between the two antennas 11, 12 is to be determined based on an optimisation taking into account for example desired signal separation, total height of the antenna system 10, and other mechanical constraints.

The indications bottom/low and top shall in one embodiment be defined as a bottom and a top direction of a central axis of the antenna system 10 arranged in between the central axes of the monocones 111,121, i.e. the central axis of the antenna system 10 defines the same angle with each central axis of the monocone 111,121. The bottom direction of the central axis of the antenna system 10 refers the direction in which the central axes of the monocones 111, 121 draw nearer. The top direction of the central axis of the antenna system 10 refers the direction in which the central axes of the monocones 111, 121 depart.

The side wall angle of the recess 112,122 and the side wall angle are part of the parameters used to achieve an impedance of the antenna 11,12 of the desired value, e.g. 50 Ohm or 75 Ohm.

The monocones 111,121, the recesses 112,122, and suspension structures 113,123 may be made at least partly of an electrically conductive material. The recesses 112,122, and/or suspension structures 113,123 may form a common or DC ground of each antenna 11,12.

As shown in the Figs. 1 the suspension structures 113,123 may be shaped such that at least the electrically conductive parts of each suspension structure 113,123 extends across only a sector of the total opening of a recess 112,122. In particular, this sector may be located at the bottom half of the recess or at the top half of the recess. If the sector covers a central part of the bottom half of a recess 112,122, the radiation pattern or beam characteristic of the antennas 11,12 is directed more parallel to a horizontal plane assuming the antenna system 10 is mounted horizontally. Under the same assumption the beam characteristic of the antennas 11,12 is directed more toward the vertical, if the sector covers a central part of the top half of a recess 112,122.

In particular, to achieve a more horizontal radiation pattern or beam characteristic, the suspension structures 113,123 may be shaped such that they cover a sector of the bottom half of each recess 112,122, particularly a sector centered at the lowest point of the circumference of the recesses 112,122. The sector may span less than +/- 45 degrees, in particular less than +/- 30 degrees, or even less than +/- 20 degrees around the lowest point of the circumference of the recesses 112,122. Further, the distal end of each of the suspension structures 113,123 extends to the monocone 111,121 it is designed to hold. However, the distal end may terminate essentially at the edge or within the base area of the monocone as mentioned before, and hence the distal end may not extend beyond the base area of the monocone. Thus the suspension structures 113,123 may be designed so as to prevent forming a cover over any area of the upper sections of the recess 112,122, which are not already covered by the monocone 111,121 itself.

By replacing the bottom half by the top half in the preceding paragraph a more vertical radiation pattern or beam characteristic may be achieved.

It will be appreciated that any of the above described geometrical limits of the suspension structure apply only to the electrically conductive parts of the suspension structure while the other areas of the recess may be covered by parts of suspension structure made of a radiation-transparent material. In particular, the suspension structures 113,123 may be embedded into or be parts of lids completely covering the total area of the recesses 112,122. Such an embodiment may alleviate the need to cover the antenna structure with a radome cover, which otherwise may be required to provide extra environmental protection and/or aerodynamically favourable shapes.

In operation the recess 112, 122 and the conductive parts of the suspension structure 113,123 are DC connected to ground. This may provide resilience against a 40kA short circuit as for example legally required in some countries for the metallic roofs of train coaches. The signal reception or transmission is performed through the connection to feeding point 114, e.g., in form of a co-axial probe connected in turn to amplifiers/driver circuits.

Each monocone antenna 11,12 may operate as antenna with a single polarization. Together the pair of monocone antennas 11, 12 of the antenna system 10 may operate as an antenna system 10 for cross-polarized signals or as a two-part antenna for MIMO systems.

Each monocone antenna 11,12 may operate as antenna with a directive pattern. Together the pair of monocone antennas 11, 12 of the antenna system may operate as an antenna system 10 with a good pattern diversity. Taking the plane view onto the top of the antenna 11 as shown in FIG. 1C as example with the directions as indicated the antennas (x-axis directed out of the paper plane) are cross-polarized in the xz-plane (but co-polarized in the xy-plane and the yz-plane) and have full pattern diversity in the yz-plane.

Together the pair of antennas 11, 12 may operate as an antenna system 10 for cross-polarized signals and with a good pattern diversity in two different planes.

Each of these characteristics may be advantageous for application as an antenna system for vehicles, in particular for the roofs of trains or train coaches or buses, particularly vehicles with roof mounted electrical connectors. They may be of particular advantage for such applications where the vehicle enters antenna corridors which alternate between a line-of-sight cross-polarized signal transmission along the track of the vehicle above roof level and signal transmission using leaky feeder cables located at either side of the track. Such systems are for example described in the European patent application no. 15165768 "ANTENNA SYSTEM FOR VEHICLES" filed 29 April 2015.

Referring to the above-cited European patent application no. 15165768 for further details, in the first case the antenna system 10 may operate as an antenna system for cross-polarized signals. When, however, entering a corridor where the general transmission direction is from the side of tracks, e.g. from base station located on one or both sides of the track or from a leaky feeder antenna corridor the pattern diversity of the antenna system 10 may enable the separation of signals from the left side and the right side of the vehicle, respectively. Several antenna systems 10 may be installed on a roof and connected via a switching system to increase the coverage provided and provide a full MIMO transmission link.

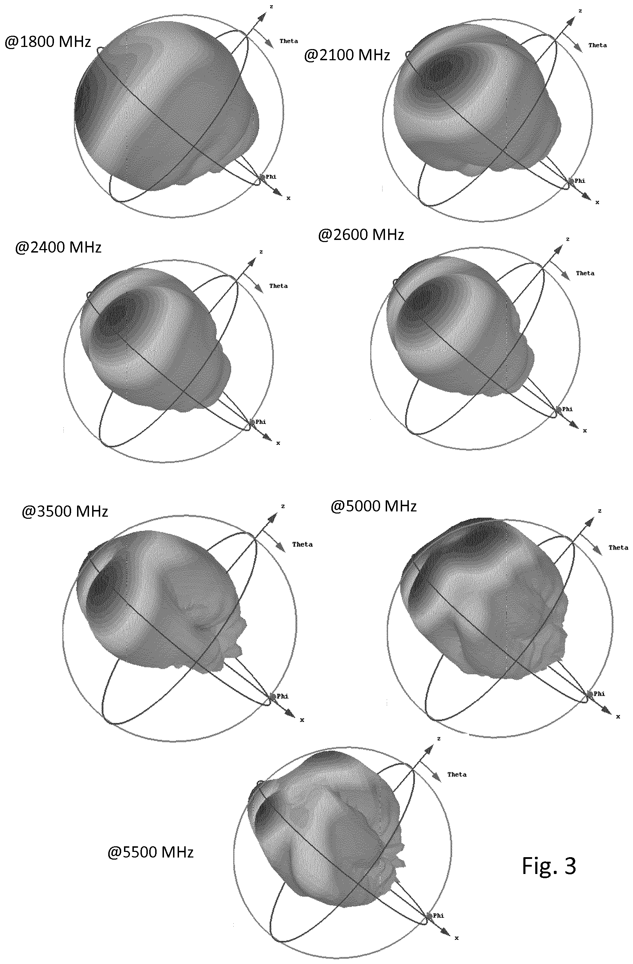

Referring now particularly to Fig. 1C, there is shown a top view on one of the monocone antennas 11 mounted on the base structure 13 with a frusto-conically shaped recess 112 and a suspensions structure 113 overlaying the monocone 111, 121 which is not visible. Also shown are exemplary parameters, i.e., an inner diameter of the circumference of the conical recess 112 of 170mm and a width of the conductive part of the suspension structure 113 and an outer diameter of the monocone (not visible) of 70 mm several performance parameter of the antenna system 10 can be modelled as shown in the following figures 2 and 3. The Cartesian tripod in the bottom right corner of Fig. 1C indicates an assumed orientation of the antenna system with the base structure resting on the x-y plane (the paper plane) and the antenna 11 being oriented at an angle between this plane and the (vertical) z-direction.

Fig. 2 shows the return losses of each of the antennas 11,12 (top curve) and the port coupling (bottom curve) between them in dB. The return losses are across a spectrum from 1700 MHz to 5500 Mhz below - 10dB. The peak return loss at around 3500 MHz may be addressed by additional tuning. Across the same spectral range the port isolation is continuously below -35dB.

Fig. 3 shows the shapes of the EM pattern the monocone antenna 11 at seven frequencies between 1800 MHz and 5500 MHz. The x direction is indicated by an arrow pointing towards the bottom right corner of the plot and the (orthogonal) z-direction is indicated by an arrow pointing towards the top right corner of each plot. When the antenna system is installed for example on a flat metal roof, the x-direction corresponds to a direction of the central axis of the monocone 111 of the monocone antenna 11 and hence be at an angle from the horizontal plane of the roof. The antenna is oriented at -45 degrees from the z-direction corresponding to the antenna 11 in figures 1. The EM characteristic shows at most frequencies two lobes in predominantly horizontal direction.

These and other simulations indicate that the matching, port isolation and general EM pattern shape of the antenna may be maintained essentially irrespective of the presence of an extended ground plane, e.g., a flat metal roof. This port isolation may be enhanced or reduced by selecting the wall thickness of the frustro-conical recess accordingly.

They further indicate that the antenna may be configured and operated as an ultra-wideband antenna in the GHz range, particularly within the range from 1700 MHz to 5500 MHz. Further the antenna may show (full) polarization diversity in a first plane and (full) pattern diversity in a second plane orthogonal to the first plane.

The simulations further indicate that the antenna system 10 may exhibit little to no spatial correlation between the ports in a uniform multipath environment.

As the base structure (here the flat metal roof) may be shown to have no significant influence on the EM performance of the antenna system 10, it can be optimized with respect to mechanical and/or aerodynamic constraints. The base structure may be used to give the whole antenna system a "tilting" angle away from the strictly vertical orientation to further adapt the antenna system to the signal transmission systems along the track.

In case the suspension structure is made of metal, the antenna system 10 may be designed as a full-metal construction, i.e., with no dielectric or non-linear parts, which also assists in keeping the risk of passive intermodulation low.

While various embodiments of the present invention have been described above, it should be understood that they have been presented by way of example only, and not of limitation. Likewise, the various diagrams may depict an example structure or other configuration for the invention, which is done to aid in understanding features and functionality that can be included in the invention. Further, it should be understood that the various features, aspects and functionality described in one or more of the individual embodiments are not limited in their applicability to the particular embodiment with which they are described, but instead can be applied, alone or in various combinations, to one or more of the other embodiments of the invention.

## Claims

1. Antenna system (10) comprising two monocone antennas (11, 12) and a base structure (13), wherein the two monocone antennas (11, 12) are mounted on the base structure (13), wherein a monocone (111,121) of each monocone antenna (11, 12) is suspended within a conical recess (112, 122) by a suspension structure (113,123) of the monocone antenna (11, 12), wherein two central axes of the two monocones (111, 121) of the two monocone antennas (11, 12) are arranged on the base structure at an angle of 70 to 110 degrees to each other.

2. Antenna system (10) according to claim 1, wherein the suspension structure (113, 123) comprises an electrically conductive part.

3. Antenna system (10) according to claim 2, wherein the electrically conductive part of the suspension structure covers a sector of either a bottom half or a top half of the conical recess (112, 122) and is centered in the plane spanned by the two central axis of the two monocones (111, 121).

4. Antenna system (10) according to claim 3, wherein the electrically conductive part of the suspension structure (113, 123) covers a sector of the bottom half of the recess.

5. Antenna system (10) according to any of claims 2 to 4, wherein the electrically conductive part of the suspension structure leaves at least a top half of the recess uncovered.

6. Antenna system (10) according to any of claims 2 to 5, wherein the electrically conductive part of the suspension structure (113, 123) and the conical recess (111, 121) are DC-connected.

7. Antenna system (10) according to any of claims 1 to 6, further comprising an additional location-detecting antenna element (14) located between the two monocone antennas (11,12).

8. Antenna system (10) according to any of claims 1 to 7, being an ultra-wideband antenna in the GHz range.

9. Antenna system (10) according to any of claims 1 to 8, being configured as a vehicle antenna system with the base structure adapted to be mounted particularly onto a flat metal roof such that the central axis of the antenna system (10) which is arranged in the middle between the central axes of the two monocones (111, 121) is arranged perpendicular to the flat metal roof.

10. Antenna system (10) according to one of claims 1 to 9, having polarisation-diversity in a first plane and pattern-diversity in a second plane orthogonal to the first plane.

11. Antenna system (10) according to claim 10, wherein in operation the polarisation-diversity in a first plane is designed to communicate with an antenna system emitting and receiving cross-polarized radiation predominantly directed along a track of a vehicle and wherein in operation the pattern-diversity in the second plane orthogonal to the first plane is designed to communicate with an antenna system emitting and receiving in a direction predominantly orthogonal to the track of the vehicle.

12. Antenna system (10) according to any of claims 1 to 11, wherein the conical recess (112, 122) and the monocone (111, 121) are arranged coaxially in each monocone antenna (11, 12).

13. Antenna system (10) according to any of claims 1 to 12, wherein two central axes of the two monocones (111, 121) of the two monocone antennas (11, 12) are arranged on the base structure at an angle of 85 to 95 degrees to each other.

14. Antenna system (10) according to any of claims 1 to 13, wherein the conical recess (112, 122) is a frusto-conical recess.

15. Vehicle comprising a metal roof and an antenna system according to one of the claims 1 to 14.

## Patentansprüche

1. Antennensystem (10), das zwei monokonische Antennen (11, 12) und eine Basisstruktur (13) umfasst, wobei die beiden monokonischen Antennen (11, 12) an der Basisstruktur (13) befestigt sind, wobei ein Monokonus (111, 121) jeder monokonischen Antenne (11, 12) durch eine Aufhängungsstruktur (113, 123) der monokonischen Antenne (11, 12) innerhalb einer konischen Vertiefung (112, 122) aufgehangen ist, wobei zwei Zentralachsen der beiden Monokonen (111, 121) der beiden monokonischen Antennen (11, 12) auf der Basisstruktur mit einem Winkel von 70 bis 110 Grad zueinander angeordnet sind.

2. Antennensystem (10) nach Anspruch 1, wobei die Aufhängungsstruktur (113, 123) ein elektrisch leitfähiges Teil umfasst.

3. Antennensystem (10) nach Anspruch 2, wobei das elektrisch leitfähige Teil der Aufhängungsstruktur einen Sektor von entweder einer unteren Hälfte oder einer oberen Hälfte der konischen Vertiefung (112, 122) bedeckt und in der Ebene zentriert ist, die durch die beiden Zentralachsen der beiden Monokonen (111, 121) aufgespannt wird.

4. Antennensystem (10) nach Anspruch 3, wobei das elektrisch leitfähige Teil des Aufhängungsstruktur (113, 123) einen Sektor der unteren Hälfte der Vertiefung bedeckt.

5. Antennensystem (10) nach einem der Ansprüche 2 bis 4, wobei das elektrisch leitfähige Teil der Aufhängungsstruktur zumindest eine obere Hälfte der Vertiefung unbedeckt lässt.

6. Antennensystem (10) nach einem der Ansprüche 2 bis 5, wobei das elektrisch leitfähige Teil der Aufhängungsstruktur (113, 123) und die konische Vertiefung (111, 121) DC-verbunden sind.

7. Antennensystem (10) nach einem der Ansprüche 1 bis 6, ferner umfassend ein zusätzliches standortdetektierendes Antennenelement (14), das sich zwischen den beiden monokonischen Antennen (11, 12) befindet.

8. Antennensystem (10) nach einem der Ansprüche 1 bis 7, das eine Ultrabreitbandantenne im GHz-Bereich ist.

9. Antennensystem (10) nach einem der Ansprüche 1 bis 8, das als ein Fahrzeugantennensystem mit einer Basisstruktur konfiguriert ist, die dazu eingerichtet ist, insbesondere auf ein flaches Metalldach befestigt zu werden, sodass die Zentralachse des Antennensystems (10), die in der Mitte zwischen den Zentralachsen der beiden Monokonen (111, 121) angeordnet ist, senkrecht zum flachen Metalldach angeordnet ist.

10. Antennensystem (10) nach einem der Ansprüche 1 bis 9, das eine Polarisation-Diversität in einer ersten Ebene und eine Muster-Diversität in einer zweiten Ebene orthogonal zu der ersten Ebene aufweist.

11. Antennensystem (10) nach Anspruch 10, wobei, im Betrieb, die Polarisation-Diversität in einer ersten Ebene dazu ausgelegt ist, mit einem Antennensystem zu kommunizieren, das kreuzpolarisierte Strahlung emittiert und empfängt, die überwiegend entlang einer Bahn eines Fahrzeugs ausgerichtet ist, und wobei, im Betrieb, die Muster-Diversität in der zweiten Ebene orthogonal zu der ersten Ebene dazu ausgelegt ist, mit einem Antennensystem zu kommunizieren, das in eine Richtung überwiegend orthogonal zu der Bahn des Fahrzeugs emittiert und empfängt.

12. Antennensystem (10) nach einem der Ansprüche 1 bis 11, wobei die konische Vertiefung (112, 122) und die Monokonen (111, 121) koaxial in jeder monokonischen Antenne (11, 12) angeordnet sind.

13. Antennensystem (10) nach einem der Ansprüche 1 bis 12, wobei zwei Zentralachsen der beiden Monokonen (111, 121) der beiden monokonischen Antennen (11, 12) auf der Basisstruktur mit einem Winkel von 85 bis 95 Grad zueinander angeordnet sind.

14. Antennensystem (10) nach einem der Ansprüche 1 bis 13, wobei die konische Vertiefung (112, 122) eine kegelstumpfförmige Vertiefung ist.

15. Fahrzeug, das ein Metalldach und ein Antennensystem nach einem der Ansprüche 1 bis 14 umfasst.

## Revendications

1. Système d'antenne (10), comprenant deux antennes monocônes (11, 12) est une structure de base (13), les deux antennes monocônes (11, 12) étant montées sur la structure de base (13), un monocône (111, 121) de chaque antenne monocône (11, 12) étant suspendu à l'intérieur d'un renfoncement conique (112, 122) par une structure de suspension (113, 123) de l'antenne monocône (11, 12), deux axes centraux des deux monocônes (111, 121) des deux antennes monocônes (11, 12) étant disposés sur la structure de base à un angle de 70 à 110° l'un par rapport à l'autre.

2. Système d'antenne (10) selon la revendication 1, dans lequel la structure de suspension (113, 123) comprend une partie électriquement conductrice.

3. Système d'antenne (10) selon la revendication 2, dans lequel la partie électriquement conductrice de la structure de suspension couvre un secteur soit d'une moitié inférieure soit d'une moitié supérieure du renfoncement conique (112, 122) et est centrée dans le plan tendu par les deux axes centraux des deux monocônes (111, 121).

4. Système d'antenne (10) selon la revendication 3, dans lequel la partie électriquement conductrice de la structure de suspension (113, 123) couvre un secteur de la moitié inférieure du renfoncement.

5. Système d'antenne (10) selon l'une quelconque des revendications 2 à 4, dans lequel la partie électriquement conductrice de la structure de suspension laisse découverte au moins une moitié supérieure du renfoncement.

6. Système d'antenne (10) selon l'une quelconque des revendications 2 à 5, dans lequel la partie électriquement conductrice de la structure de suspension (113, 123) et le renfoncement conique (111, 121) sont connectés à une source de courant continu.

7. Système d'antenne (10) selon l'une quelconque des revendications 1 à 6, comprenant en outre un élément d'antenne supplémentaire (14) de détection d'emplacement situé entre les deux antennes monocônes (11, 12).

8. Système d'antenne (10) selon l'une quelconque des revendications 1 à 7, étant une antenne ultra large bande dans la plage des GHz.

9. Système d'antenne (10) selon l'une quelconque des revendications 1 à 8, étant configuré en tant que système d'antenne de véhicule, la structure de base étant prévue pour être montée en particulier sur un toit métallique plat de telle sorte que l'axe central du système d'antenne (10) qui est disposé au milieu entre les axes centraux des deux monocônes (111, 121) soit disposé perpendiculairement au toit métallique plat.

10. Système d'antenne (10) selon l'une des revendications 1 à 9, ayant une diversité de polarisation dans un premier plan et une diversité de motifs dans un deuxième plan perpendiculaire au premier plan.

11. Système d'antenne (10) selon la revendication 10, dans lequel, pendant le fonctionnement, la diversité de polarisation dans un premier plan est conçue pour communiquer avec un système d'antenne émettant et recevant des radiations à polarisation croisée orientées principalement le long d'une voie d'un véhicule et dans lequel, pendant le fonctionnement, la diversité de motifs dans le deuxième plan perpendiculaire au premier plan est conçue pour communiquer avec un système d'antenne émettant et recevant dans une direction principalement perpendiculaire à la voie du véhicule.

12. Système d'antenne (10) selon l'une quelconque des revendications 1 à 11, dans lequel le renfoncement conique (112, 122) et le monocône (111, 121) sont disposés coaxialement dans chaque antenne monocône (11, 12).

13. Système d'antenne (10) selon l'une quelconque des revendications 1 à 12, dans lequel deux axes centraux des deux monocônes (111, 121) des deux antennes monocônes (11, 12) sont disposés sur la structure de base suivant un angle de 85 à 95° l'un par rapport à l'autre.

14. Système d'antenne (10) selon l'une quelconque des revendications 1 à 13, dans lequel le renfoncement conique (112, 122) est un renfoncement tronconique.

15. Véhicule comprenant un toit métallique et un système d'antenne selon l'une des revendications 1 à 14.
